# EUROPÄISCHE PATENTSCHRIFT

(11) **EP 3 197 636 B1**
(45) Veröffentlichungstag und Bekanntmachung des Hinweises auf die Patenterteilung: **06.11.2019**
(21) Anmeldenummer: 15760447.1
(22) Anmeldetag: 08.09.2015
(51) Int. Cl.: B23Q 39/02, B27C 5/00, B23Q 1/01

(54) **BEARBEITUNGSVORRICHTUNG**
MACHINING DEVICE
DISPOSITIF D'USINAGE

(30) Priorität: 22.09.2014 DE 102014219060
(43) Veröffentlichungstag der Anmeldung: 02.08.2017
(73) Patentinhaber: HOMAG GmbH, 72296 Schopfloch (DE)
(72) Erfinder: AMOS, Hartmut, 72108 Rottenburg (DE); SCHMIEDER, Volker, 72116 Mössingen (DE)
(74) Vertreter: Grauel, Andreas
(86) Internationale Anmeldenummer: PCT/EP2015/070509
(87) Internationale Veröffentlichungsnummer: WO 2016/045959

(56) Entgegenhaltungen:
- EP-A1- 1 777 048
- DE-A1- 10 021 684
- DE-A1- 10 146 017
- DE-A1- 19 819 383
- DE-A1- 19 903 312
- DE-A1-102010 024 321
- US-A1- 2012 107 064

## Beschreibung

### Technisches Gebiet

Die Erfindung betrifft eine Bearbeitungsvorrichtung nach dem Oberbegriff von Anspruch 1 (siehe z.B. DE 101 46 017 A1).

### Stand der Technik

Bearbeitungsvorrichtungen zur Bearbeitung von Werkstücken sind im Stand der Technik vielfach bekannt. Solche Bearbeitungsvorrichtungen weisen üblicherweise eine Werkstückhalterung auf, mittels welcher ein Werkstück anordenbar und befestigbar ist. Solche Werkstückhalterungen können stillstehend oder verfahrbar ausgebildet sein, so dass sie beispielsweise von einem Werkstücktisch oder durch verfahrbare Werkstückschlitten oder ähnliches ausgebildet sein können. Weiterhin umfassen solche Bearbeitungsvorrichtungen oftmals ein Portal oder einen Ausleger, an welchem Werkzeuge zur Bearbeitung des Werkstücks vorgesehen sind. Dabei kann entweder das Werkstück am Werkzeug vorbeifahrend vorgesehen sein oder umgekehrt, so dass eine Relativbewegung zwischen Werkzeug und Werkstück vorgesehen und ausgenutzt wird, um das Werkstück beispielsweise entlang einer Seite oder Kante bearbeiten zu können.

Dabei sind auch Portalvorrichtungen bekannt, bei welchen ein Werkstückschlitten durch das Portal verfahren wird, an welchem das Werkstück befestigt ist, um das Werkstück beispielsweise im Durchlaufbetrieb zu bearbeiten. Solche Portalanlagen sind bekannt, bei welchen ein Werkzeug zur Bearbeitung des Werkstücks an einer Seite des Portals mit einem Werkzeugschlitten verlagerbar ist, um verschiedene Werkzeugpositionen einnehmen zu können, so dass je nach verwendetem Werkzeug und Werkstück das Werkzeug in eine andere Position eingestellt werden kann, wenn das Werkstück vorbeigeführt wird. Auch kann beim Bearbeitungsvorgang das Werkzeug mittels des Werkzeugschlittens verlagert werden, um eine entsprechende Kontur an dem Werkstück zu erzeugen.

Bei der Anordnung eines Werkzeugs an einem an einer Seite des Portals angeordneten Werkzeugschlittens besteht jedoch hinsichtlich der Bearbeitungskapazität noch Steigerungsbedarf. Daher wurden Portalvorrichtungen bekannt, welche auf beiden Seiten des Portals einen verlagerbaren Werkzeugschlitten für die Anordnung und zum Verfahren jeweils eines Werkzeugs aufweisen. Dadurch kann das Werkstück an beiden Werkzeugen nacheinander vorbeigefahren werden, so dass zwei Bearbeitungsschritte unmittelbar in einem Durchgang vorgenommen werden können.

Dabei ist der Abstand der Mittelachsen der Werkzeuge aufgrund der Dimensionierung des Portals und der Werkzeuge selbst zumindest etwa 1,2m, so dass die erwünschte Effizienzsteigerung im Wesentlichen nur für Werkstücke erreicht wird, die länger sind als dieser Abstand. Für Werkstücke, die kürzer sind als dieser Abstand würde auch ein zweifaches Verfahren an einem Werkzeug die gleiche Bearbeitungseffizienz ergeben.

### Darstellung der Erfindung, Aufgabe, Lösung, Vorteile

Es ist die Aufgabe der Erfindung, eine Bearbeitungsvorrichtung zu schaffen, welche auch bei kürzeren Werkstücken eine deutliche Steigerung der Bearbeitungseffizienz erbringt.

Diese Aufgabe wird mit den Merkmalen von Anspruch 1 gelöst.

Ein Ausführungsbeispiel der Erfindung betrifft eine Bearbeitungsvorrichtung, zum Bearbeiten von Werkstücken aus Holz, Holzwerkstoffen, Kunststoff oder dergleichen, mit einer Werkstückhalterung zum Halten eines Werkstücks während der Bearbeitung, mit einem Führungsmittel zum verlagerbaren Führen eines Werkzeugschlittens zum Halten und Verfahren eines daran angeordneten Werkzeugs, wobei die Werkstückhalterung und/oder das Führungsmittel mittels Verlagerungsmitteln verlagerbar sind, zum Erzeugung einer Relativbewegung in einer Bearbeitungsrichtung zwischen dem Werkstück und dem Werkzeug zur Bearbeitung des Werkstücks, wobei der Werkstückschlitten an einer Seite des Führungsmittels verlagerbar angeordnet ist und der Werkstückschlitten auf einer Seite des Führungsmittels und in Bearbeitungsrichtung des Werkstücks nebeneinander zwei Werkzeuge trägt. Dadurch kann der Abstand der Werkzeuge zueinander stark reduziert werden, so dass eine gleichzeitige Bearbeitung mit beiden Werkzeugen sich auch bei relativ kurzen Werkstücken lohnt und einen Zeitvorteil erbringt. Dadurch sind die beiden auf dem einen Werkzeugschlitten angeordneten Werkzeuge gleichzeitig im Einsatz, um ein an den beiden Werkzeugen in Bearbeitungsrichtung vorbeigeführtes Werkstück in einem Arbeitsschritt durch beide Werkzeuge gleichzeitig zu bearbeiten.

Beide Werkzeuge sind mittels des Werkstückschlittens gemeinsam in einer ersten Richtung senkrecht zur Bearbeitungsrichtung verfahrbar. Dadurch kann die Bearbeitung des Werkstücks auch bei verschieden breiten Werkstücken vorgenommen werden, wenn die Werkzeuge gemeinsam in der ersten Richtung verlagert werden können. Dabei ist die erste Richtung vorteilhafterweise senkrecht zur Bearbeitungsrichtung und insbesondere quer bzw. horizontal dazu ausgerichtet.

Zumindest eines der Werkzeuge oder beide Werkzeuge ist bzw. sind jeweils auf einem Unterschlitten angeordnet, wobei der oder die Unterschlitten auf dem Werkzeugschlitten derart angeordnet ist bzw. sind, dass das Werkzeug in einer zweiten Richtung senkrecht zur ersten Richtung und senkrecht zur Bearbeitungsrichtung verfahrbar ist. Dadurch kann noch eine Einstellung oder Feinjustierung in einer weiteren Richtung erfolgen, um auch weitere bzw. zusätzliche Bereiche des Werkstücks bearbeiten zu können.

Zumindest eines der Werkzeuge oder beide Werkzeuge ist bzw. sind jeweils auf einem Unterschlitten angeordnet, wobei der oder die Unterschlitten auf dem Werkzeugschlitten derart angeordnet ist bzw. sind, dass das Werkzeug in der ersten Richtung verfahrbar ist. Dadurch kann noch eine Justierung des Werkzeugs oder der Werkzeuge zueinander bzw. auch zum Werkstück erfolgen. Das eine Werkzeug oder beide Werkzeuge können damit relativ zum Werkzeugschlitten in der ersten Richtung verfahren bzw. eingestellt werden. Damit kann auch das eine Werkzeug auf dem Werkzeugschlitten in der ersten Richtung relativ zum zweiten Werkzeug verstellt werden.

Besonders vorteilhaft ist es, wenn auf dem Werkzeugschlitten oder auf dem oder den Unterschlitten jeweils eine Antriebsanordnung mit einer Werkzeugaufnahme angeordnet ist, zum Aufnehmen und Antreiben von jeweils einem Bearbeitungswerkzeug. Dabei ist das Bearbeitungswerkzeug ein Werkzeug, das der Bearbeitung der Oberfläche des Werkstücks oder des Volumens des Werkstücks dient. Besonders vorteilhaft können verschiedene solche Werkzeuge verwendet werden, die beispielsweise aus einem Werkzeugspeicher nach einer entsprechenden Auswahl des Werkzeugs entnommen und nach der Benutzung wieder dort abgelegt werden.

Auch ist es vorteilhaft, wenn die Antriebsanordnung als eine Spindeleinheit ausgebildet ist, wie insbesondere als eine 4-Achs- oder 5-Achsspindeleinheit. Dadurch können auch komplexe Strukturen mittels des Werkzeugs in das Werkstück eingebracht werden.

Auch ist es vorteilhaft, wenn das Werkzeug ein spanabhebendes Werkzeug ist, wie insbesondere ein Fräswerkzeug, ein Bohrwerkzeug oder ein Sägewerkzeug ist.

Auch ist es vorteilhaft, wenn das Führungsmittel als feststehendes Portal oder als feststehender Ausleger ausgebildet ist und die Werkstückhalterung mittels eines Antriebs- und Führungsmittels verlagerbar ausgebildet ist und das Werkstück verlagerbar führt. Dabei kann die Werkstückhalterung durch das Portal oder unter den Ausleger verfahrbar sein, um das Werkstück mittels des an dem Führungsmittel verlagerbaren Werkzeugs bearbeiten zu können.

Besonders vorteilhaft ist es, wenn das Führungsmittel als verlagerbares Portal oder als verlagerbarer Ausleger ausgebildet ist und die Werkstückhalterung als feststehender Werkstücktisch ausgebildet ist. Dabei kann das Portal oder der Ausleger über die Werkstückhalterung verfahrbar sein, um das Werkstück mittels des an dem Führungsmittel verlagerbaren Werkzeugs bearbeiten zu können.

Bei der erfindungsgemäßen Vorrichtung ist es auch vorteilhaft, wenn aus einem Werkzeugspeicher gleichzeitig zwei Werkzeuge entnehmbar und in den Werkzeugschlitten in entsprechende Werkzeugaufnahmen einsetzbar sind, so dass auch diesbezüglich ein Zeitvorteil erreicht werden kann.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: eine schematische Darstellung eines ersten nicht erfindungsgemäßen Ausführungsbeispiels einer Bearbeitungsvorrichtung, und
- Fig. 2: eine schematische Darstellung eines ersten erfindungsgemäßen Ausführungsbeispiels einer Bearbeitungsvorrichtung.

### Bevorzugte Ausführung der Erfindung

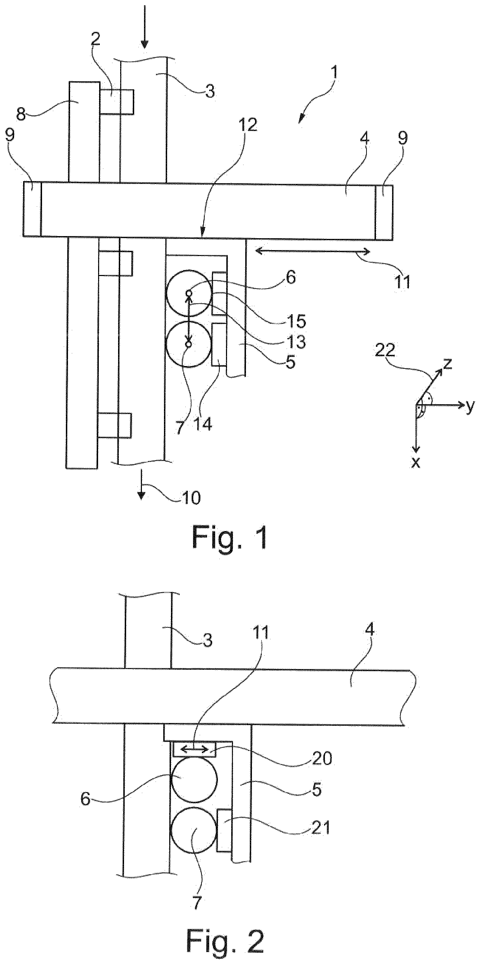

Die Figur 1 zeigt eine Bearbeitungsvorrichtung 1, die nicht unter den Schutzumfang des Anspruches 1 fällt, insbesondere zum Bearbeiten von Werkstücken aus Holz, Holzwerkstoffen, Kunststoff oder dergleichen. Die Bearbeitungsvorrichtung 1 weist eine Werkstückhalterung 2 auf, mittels welcher Werkstücke 3 zur Bearbeitung gehalten werden können.

Die Bearbeitungsvorrichtung weist auch ein Führungsmittel 4 zum verlagerbaren Führen eines Werkzeugschlittens 5 auf, zum Halten und Verfahren eines ersten Werkzeugs 6 und eines zweiten Werkzeugs 7.

Dabei sind die Werkstückhalterung 2 und/oder das Führungsmittel 4 mittels Verlagerungsmitteln 8, 9 verlagerbar ausgebildet, zur Erzeugung einer Relativbewegung in einer Bearbeitungsrichtung 10 zwischen dem Werkstück 3 und dem ersten und dem zweiten Werkzeug 6, 7 zur Bearbeitung des Werkstücks in Bearbeitungsrichtung.

Die Figur 1 zeigt, dass der Werkstückschlitten 5 an einer Seite 12 des Führungsmittels 4 verlagerbar, wie in Richtung 11 verschiebbar angeordnet ist, Der Werkstückschlitten 5 trägt erfindungsgemäß auf einer Seite 12 des Führungsmittels 4 und in Bearbeitungsrichtung 10 des Werkstücks nebeneinander zwei Werkzeuge 6, 7.

Dies bewirkt, dass der Abstand der Werkzeuge gering gehalten werden kann, wie beispielsweise im Bereich von etwa 40 cm gehalten werden kann. Dabei ist der Abstand der Achsabstand 13 der Werkzeuge 6, 7.

Durch die Anordnung auf dem Werkzeugschlitten sind die beiden Werkzeuge 6, 7 mittels des Werkstückschlittens 5 gemeinsam in einer ersten Richtung 11 senkrecht zur Bearbeitungsrichtung 10 verfahrbar angeordnet. Die erste Richtung ist dabei typischerweise die y-Richtung, während die Bearbeitungsrichtung die x-Richtung ist.

Auf dem Werkzeugschlitten sind Unterschlitten 14, 15 vorgesehen. Dabei ist zumindest eines der Werkzeuge 6, 7 oder es sind auch beide Werkzeuge 6, 7 jeweils auf einem Unterschlitten 14, 15 angeordnet, wobei der oder die Unterschlitten 14, 15 auf dem Werkzeugschlitten 5 derart angeordnet ist bzw. sind, dass das Werkzeug 6, 7 in einer zweiten Richtung senkrecht zur ersten Richtung 11 und senkrecht zur Bearbeitungsrichtung 10 verfahrbar ist. Die zweite Richtung 22 ist dabei die z-Richtung, die senkrecht auf der Ebene steht, die durch die erste Richtung 11 und die Bearbeitungsrichtung 10 aufgespannt wird.

Die Figur 2 zeigt ein weiteres Ausführungsbeispiel, bei welchem an dem Werkzeugschlitten 5 ebenfalls zwei Werkzeuge 6, 7 angeordnet sind, die jeweils auf Unterschlitten 20, 21 verlagerbar angeordnet sind. Dabei ist zumindest eines der Werkzeuge oder es sind beide Werkzeuge jeweils auf einem Unterschlitten 20, 21 angeordnet, wobei zumindest einer der Unterschlitten oder die Unterschlitten auf dem Werkzeugschlitten 5 derart angeordnet ist bzw. sind, dass das Werkzeug 6, 7 auch in der ersten Richtung verfahrbar ist. So ist im Ausführungsbeispiel der Figur 2 der Unterschlitten 20 derart ausgeführt, dass eine Bewegung auch in der ersten Richtung 11 möglich ist. Dabei sind die Unterschlitten auch derart ausgebildet, dass die Werkzeuge auch in der zweiten Richtung verlagerbar sind. Durch die Verstellung des Werkzeugs 6 in der ersten Richtung 11 mit zumindest einem kleinen Hub kann die Eindringtiefe des Werkzeugs 6 in das Werkstück individuell gesteuert werden. Dabei kann die Eindringtiefe des anderen Werkzeugs 7 durch die Stellung des Werkzeugschlittens 5 vorgenommen werden.

Bei beiden Ausführungsbeispielen ist es vorteilhaft, wenn auf dem Werkzeugschlitten 5 oder auf dem oder den Unterschlitten 14, 15, 20, 21 jeweils eine Antriebsanordnung mit einer Werkzeugaufnahme angeordnet ist, zum Aufnehmen und Antreiben von jeweils einem Werkzeug 6, 7 zur Bearbeitung des Werkstücks 3. Dabei ist die Antriebsanordnung eine einfache Antriebsspindel oder als eine Spindeleinheit ausgebildet, wie insbesondere als eine 4-Achs- oder 5-Achsspindeleinheit.

Das jeweilige Werkzeug 6, 7 ist erfindungsgemäß ein spanabhebendes Werkzeug, wie insbesondere ein Fräswerkzeug, ein Bohrwerkzeug oder ein Sägewerkzeug. Kantenbearbeitungsvorrichtungen zum Aufbringen von Kantenmaterial oder zum endbearbeiten von aufgebrachtem Kantenmaterial soll explizit nicht als Werkzeug angesehen werden, sondern nur Werkzeuge, welche spanabhebend das Werkstück selbst bearbeiten.

Das Führungsmittel 4 kann je nach Ausbildung der Bearbeitungsvorrichtung 1 als ein feststehendes Portal oder als feststehender Ausleger ausgebildet sein. Dabei ist es dann vorteilhaft, wenn die Werkstückhalterung 2 mittels eines Verlagerungsmittels 8, wie eines Antriebs- und Führungsmittels, verlagerbar ausgebildet ist und dadurch ein Werkstück 3 verlagerbar führt und verlagert. Alternativ dazu kann das Führungsmittel 4 als verlagerbares Portal oder als verlagerbarer Ausleger ausgebildet sein, das oder der mit den Verlagerungsmitteln 9 verlagerbar ist, wobei es dann vorteilhaft wäre, wenn die Werkstückhalterung 2 beispielsweise als feststehender Werkstücktisch ausgebildet ist.

Dadurch kann jeweils erreicht werden, dass das Werkstück 3 in Bearbeitungsrichtung 10 an den beiden Werkzeugen 6, 7 in einfacher und effizienter Weise vorbei geführt werden kann, um das Werkstück zu bearbeiten.

### Bezugszeichenliste

- 1: Bearbeitungsvorrichtung
- 2: Werkstückhalterung
- 3: Werkstück
- 4: Führungsmittel
- 5: Werkzeugschlitten
- 6: Werkzeug
- 7: Werkzeug
- 8: Verlagerungsmittel
- 9: Verlagerungsmittel
- 10: Bearbeitungsrichtung
- 11: erste Richtung
- 12: Seite
- 13: Achsabstand
- 14: Unterschlitten
- 15: Unterschlitten
- 20: Unterschlitten
- 21: Unterschlitten
- 22: zweite Richtung

## Patentansprüche

1. Bearbeitungsvorrichtung (1) zum Bearbeiten von Werkstücken (3) aus Holz, Holzwerkstoffen, Kunststoff oder dergleichen, mit einer Werkstückhalterung (2) zum Halten eines Werkstücks (3) während der Bearbeitung, mit einem Führungsmittel (4) zum verlagerbaren Führen eines Werkzeugschlittens (5) zum Halten und Verfahren eines Werkzeugs (6,7), wobei die Werkstückhalterung (2) und/oder das Führungsmittel (4) mittels Verlagerungsmitteln (8,9) verlagerbar sind, zum Erzeugung einer Relativbewegung in einer Bearbeitungsrichtung (10) zwischen dem Werkstück (3) und dem Werkzeug (6,7) zur Bearbeitung des Werkstücks (3), wobei der Werkzeugschlitten (5) an einer Seite (12) des Führungsmittels (4) verlagerbar angeordnet ist und der Werkzeugschlitten (5) auf einer Seite (12) des Führungsmittels (4) und in Bearbeitungsrichtung (10) des Werkstücks (3) nebeneinander zwei Werkzeuge (6,7) trägt, wobei die beiden Werkzeuge (6,7) mittels des Werkzeugschlittens (5) gemeinsam in einer ersten Richtung (11) senkrecht zur Bearbeitungsrichtung (10) verfahrbar sind und wobei zumindest eines der Werkzeuge oder beide Werkzeuge (6,7) jeweils auf einem Unterschlitten (14,15,20,21) angeordnet ist bzw. sind, wobei der oder die Unterschlitten (14,15,20,21) auf dem Werkzeugschlitten (5) derart angeordnet ist bzw. sind, dass das Werkzeug (6,7) in einer zweiten Richtung (22) senkrecht zur ersten Richtung (11) und senkrecht zur Bearbeitungsrichtung (10) verfahrbar ist und **dadurch gekennzeichnet, dass** zumindest eines der Werkzeuge oder beide Werkzeuge (6,7) jeweils auf einem Unterschlitten (14,15,20,21) angeordnet ist bzw. sind, wobei der oder die Unterschlitten auf dem Werkzeugschlitten (5) derart angeordnet ist bzw. sind, dass das Werkzeug in der ersten Richtung (11) verfahrbar ist.

2. Bearbeitungsvorrichtung nach Anspruch 1, **dadurch gekennzeichnet, dass** auf dem Werkzeugschlitten (5) oder auf dem oder den Unterschlitten (14,15,20,21) jeweils eine Antriebsanordnung mit einer Werkzeugaufnahme angeordnet ist, zum Aufnehmen und Antreiben von jeweils einem Werkzeug (6,7).

3. Bearbeitungsanordnung nach Anspruch 2, **dadurch gekennzeichnet, dass** die Antriebsanordnung als eine Spindeleinheit ausgebildet ist, wie insbesondere als eine 4-Achs- oder 5-Achsspindeleinheit.

4. Bearbeitungsvorrichtung nach einem der vorhergehenden Ansprüche, **dadurch gekennzeichnet, dass** das Werkzeug (6,7) ein spanabhebendes Werkzeug ist, wie insbesondere ein Fräswerkzeug, ein Bohrwerkzeug oder ein Sägewerkzeug.

5. Bearbeitungsvorrichtung nach einem der vorhergehenden Ansprüche, **dadurch gekennzeichnet, dass** das Führungsmittel (4) als feststehendes Portal oder als feststehender Ausleger ausgebildet ist und die Werkstückhalterung (2) mittels eines Antriebs- und Führungsmittels verlagerbar ausgebildet ist und das Werkstück verlagerbar führt.

6. Bearbeitungsvorrichtung nach einem der vorhergehenden Ansprüche, **dadurch gekennzeichnet, dass** das Führungsmittel (4) als verlagerbares Portal oder als verlagerbarer Ausleger ausgebildet ist und die Werkstückhalterung (2) als feststehender Werkstücktisch ausgebildet ist.

7. Bearbeitungsvorrichtung nach zumindest einem der vorhergehenden Ansprüche, **dadurch gekennzeichnet, dass** aus einem Werkzeugspeicher gleichzeitig zwei Werkzeuge entnehmbar und in den Werkzeugschlitten in entsprechende Werkzeugaufnahmen einsetzbar sind.

## Claims

1. A machining device (1) for machining workpieces (3) made of wood, wood materials, plastics material or the like, having a workpiece holder (2) for holding a workpiece (3) during machining, having a guide means (4) for the displaceable guiding of a tool slide (5) for holding and moving a tool (6, 7), wherein the workpiece holder (2) and/or the guide means (4) are displaceable by means of displacement means (8, 9) in order to create a relative movement in a machining direction (10) between the workpiece (3) and the tool (6, 7) for machining the workpiece (3), wherein the tool slide (5) is arranged in a displaceable manner on one side (12) of the guide means (4) and the tool slide (5) bears two tools (6, 7) alongside one another on one side (12) of the guide means (4) and in the machining direction (10) of the workpiece (3), wherein the two tools (6, 7) are movable together in a first direction (11) perpendicular to the machining direction (10) by means of the tool slide (5) and wherein at least one of the tools or both tools (6, 7) is or are each arranged on a secondary slide (14, 15, 20, 21), wherein the secondary slide(s) (14, 15, 20, 21) is or are arranged on the tool slide (5) such that the tool (6, 7) is movable in a second direction (22) perpendicular to the first direction (11) and perpendicular to the machining direction (10), and **characterised in that** at least one of the tools or both tools (6, 7) is or are each arranged on a secondary slide (14, 15, 20, 21), wherein the secondary slide (s) is or are arranged on the tool slide (5) such that the tool is movable in the first direction (11).

2. The machining device as claimed in claim 1, **characterised in that** a respective drive arrangement having a tool receptacle is arranged on the tool slide (5) or on the secondary slide (s) (14, 15, 20, 21) in order to receive and drive in each case one tool (6, 7).

3. The machining arrangement as claimed in claim 2, **characterised in that** the drive arrangement is in the form of a spindle unit, such as in particular of a 4-axis or 5-axis spindle unit.

4. The machining device as claimed in one of the preceding claims, **characterised in that** the tool (6, 7) is a cutting tool, such as in particular a milling tool, a drilling tool or a sawing tool.

5. The machining device as claimed in one of the preceding claims, **characterised in that** the guide means (4) is in the form of a stationary gantry or of a stationary extension arm and the workpiece holder (2) is configured to be displaceable by means of a drive and guide means and guides the workpiece in a displaceable manner.

6. The machining device as claimed in one of the preceding claims, **characterised in that** the guide means (4) is in the form of a displaceable gantry or of a displaceable extension arm and the workpiece holder (2) is in the form of a stationary workpiece table.

7. The machining device as claimed in at least one of the preceding claims, **characterised in that** two tools are removable simultaneously from a tool magazine and are insertable into the tool slide into corresponding tool receptacles.

## Revendications

1. Dispositif d'usinage (1) servant à l'usinage de pièces à usiner (3) en utilisant du bois, des matériaux à base de bois, de la matière plastique ou des matériaux analogues, ledit dispositif d'usinage comprenant un support de pièces à usiner (2) servant au maintien d'une pièce à usiner (3) au cours de l'usinage, comprenant un moyen de guidage (4) servant au guidage mobile d'un chariot porte-outil (5) servant au maintien et au déplacement d'un outil (6, 7), où le support de pièces à usiner (2) et / ou le moyen de guidage (4) peuvent être déplacés à l'aide de moyens de déplacement (8, 9) servant à la création d'un mouvement relatif se produisant dans une direction d'usinage (10), entre la pièce à usiner (3) et l'outil (6, 7) servant à l'usinage de la pièce à usiner (3), où le chariot porte-outil (5) est disposé en pouvant être déplacé sur un côté (12) du moyen de guidage (4), et le chariot porte-outil (5) supporte deux outils (6, 7) disposés l'un à côté de l'autre sur un côté (12) du moyen de guidage (4) et dans la direction d'usinage (10) de la pièce à usiner (3), où les deux outils (6, 7) peuvent être déplacés ensemble, à l'aide du chariot porte-outil (5), dans une première direction (11) perpendiculaire à la direction d'usinage (10), et où au moins l'un des outils ou les deux outils (6, 7) est ou sont disposé (s) à chaque fois sur un coulisseau inférieur (14, 15, 20, 21), où le ou les coulisseau(x) inférieur(s) (14, 15, 20, 21) est ou sont disposé (s) sur le chariot porte-outil (5) de manière telle, que l'outil (6, 7) puisse être déplacé dans une seconde direction (22) perpendiculaire à la première direction (11) et perpendiculaire à la direction d'usinage (10), et caractérisé en qu'au moins l'un des outils ou les deux outils (6, 7) est ou sont disposé (s) à chaque fois sur un coulisseau inférieur (14, 15, 20, 21), où le ou les coulisseau(x) inférieur(s) est ou sont disposé(s) sur le chariot porte-outil (5) de manière telle, que l'outil puisse être déplacé dans la première direction (11).

2. Dispositif d'usinage selon la revendication 1, **caractérisé en ce que**, à chaque fois, un dispositif d'entraînement comportant un logement d'outil est disposé sur le chariot porte-outil (5) ou bien sur le ou les coulisseau(x) inférieur(s) (14, 15, 20, 21), ledit dispositif d'entraînement servant au logement et à l'entraînement à chaque fois d'un outil (6, 7).

3. Dispositif d'usinage selon la revendication 2, **caractérisé en ce que** le dispositif d'entraînement est conçu comme un ensemble unitaire de broches, en particulier comme un ensemble unitaire de broches à 4 axes ou à 5 axes.

4. Dispositif d'usinage selon l'une quelconque des revendications précédentes, **caractérisé en ce que** l'outil (6, 7) est un outil fonctionnant par enlèvement de copeaux, comme en particulier un outil de fraisage, un outil de perçage ou un outil de sciage.

5. Dispositif d'usinage selon l'une quelconque des revendications précédentes, **caractérisé en ce que** le moyen de guidage (4) est conçu comme un portique fixe ou comme un bras de potence fixe, et le support de pièces à usiner (2) est conçu en pouvant être déplacé à l'aide d'un moyen d'entraînement et de guidage et guide la pièce à usiner pouvant être déplacée.

6. Dispositif d'usinage selon l'une quelconque des revendications précédentes, **caractérisé en ce que** le moyen de guidage (4) est conçu comme un portique pouvant être déplacé ou comme un bras de potence pouvant être déplacé, et le support de pièces à usiner (2) est conçu comme une table porte-pièces fixe.

7. Dispositif d'usinage selon au moins l'une quelconque des revendications précédentes, **caractérisé en ce que** deux outils peuvent être retirés en même temps d'un magasin d'outils et peuvent être introduits dans des logements d'outils correspondants placés dans le chariot porte-outil.
